# EUROPEAN PATENT SPECIFICATION

(11) **EP 2 362 609 B1**
(45) Date of publication and mention of the grant of the patent: **01.05.2013**
(21) Application number: 10171412.9
(22) Date of filing: 30.07.2010
(51) Int. Cl.: H04L 29/12, G06F 9/50

(54) **System for flexibly accessing devices in a network**
System für flexiblen Zugriff auf Vorrichtungen in einem Netzwerk
Système pour un accès flexible à des dispositifs dans un réseau

(30) Priority: 27.01.2010 EP 10151801
(43) Date of publication of application: 31.08.2011
(73) Proprietor: Ricoh Company Ltd., Tokyo 143-8555 (JP)
(72) Inventor: Mock, Kai, 40472, Düsseldorf (DE); Bushnaq, Abdalla, 40472, Düsseldorf (DE)
(74) Representative: Schwabe - Sandmair - Marx

(56) References cited:
- WO-A2-2008/003536
- US-A- 4 980 824
- US-A1- 2002 120 664
- US-A1- 2005 013 280
- SU G ET AL: "Mobile Communication with Virtual Network Address Translation", INTERNET CITATION, February 2002 (2002-02), XP002286437, Retrieved from the Internet: URL:http://www.ncl.cs.columbia.edu/publica tions/cucs-003-02.pdf [retrieved on 2004-06-29]
- MOSHARAF KABIR CHOWDHURY N M ET AL: "iMark: An identity management framework for network virtualization environment", INTEGRATED NETWORK MANAGEMENT, 2009. IM '09. IFIP/IEEE INTERNATIONAL SYMPOSIUM ON, IEEE, PISCATAWAY, NJ, USA, 1 June 2009 (2009-06-01), pages 335-342, XP031499121, ISBN: 978-1-4244-3486-2

## Description

The present invention concerns a system according to claim 1, and in particular a system for accessing a changing number of varying devices in a network, in particular by means of flexibly assembled task extensions which are suitable for many software configurations, in order to provide meta-tasks which are cast to serve a particular purpose.

Usually, networks consist of a large number of devices which are accessible through said network, and one or more network server devices which are in particular equipped with a cache memory, wherein the server can have access to a database which stores persistent data of the object model-orientated system, wherein the objects are the devices to be accessed and controlled. Software tasks can be developed in such systems, which are for example JAVA-based systems, wherein each task has a particular function. Each of these software tasks is designed for its particular function and cannot be used for any other functions.

If a network is modified by adding or moving devices, these changes have to be communicated to the network servFer in order to enable the server to access and control the devices and in particular also for general communication purposes.

If, for example, one or more devices in said network are switched off during the night, these devices are not then accessible through their associated network addresses. On the other hand, if a device is moved from one end of a building to another where it is needed, the network server will no longer be able to access this device under its stored network address, but only through another network address. Accordingly, many situations are conceivable in which the network is altered in such a way that the network server can no longer access a device which would otherwise be expected to be accessible through a particular network address.

Furthermore, if a particular functionality is necessary in order to access devices for particular communication processes or the like, it is always necessary to develop a new software task for said particular purposes, wherein if particular functions have to be realised, it may be possible to use these functions as software tasks, wherein these functions are necessary for a large number of similar operations which have to be assembled in particular way in order to serve particular needs.

Su et al., Mobile Communication with Virtual Network Address Translation, published on the website of Columbia University and dated February 2002 (document identification XP002286437) discloses a virtual network address translation (VNAT) method that allows for transparent migration of end-to-end live network connections associated with various computation units. The VNAT architecture disclosed is based on the simple idea of introducing a virtual address to identify a connection end point. However, that document discloses that, when a connection end point migrates to a new location, its virtual address stays unchanged and therefore the virtual connection will stay intact.

Mosharaf Kabir Chowdhury et al., iMark: An identity management framework for network virtualization environment, IFIP/IEEE International Symposium on Integrated Network Management 2009, pages 335 - 342, ISBN 978-1-4244-3486-2, discloses a virtual network architecture which is based on a global identity space enabling end hosts to communicate to each other within and outside of their own networks.

It is the object of the present invention to improve the flexibility of network systems and to simplify the development burden for producing suitable software for recurring operations or sequences of identical operations.

In accordance with one aspect of the present invention, a system is proposed which includes a network comprising a plurality of connections, wherein each of the connections is identified by means of a specific identification entity. A network server of the system is configured to access the plurality of connections using the specific identification entities. Each of the specific identification entities can be combined with a respective connection data entity and a respective device data entity. If devices are stored in a memory portion of the network server which is to be accessible through specific identification entities, and a specific device which is deemed to be accessible through a particular specific identification entity is in fact not accessible through said particular specific identification entity, then the relation between the device data entity and the particular specific identification entity is deleted, whereas the connection data entity is maintained.

Accordingly, if another device responds when accessing a connection formerly assigned to the expected device, then the connection data entity of the expected device is transferred to the device which has actually responded. In other words, the connection data entity of the expected device is moved or migrated so as to then be assigned to the device which is actually accessible using it.

In accordance with another aspect of the present invention, it is advantageous to always store device data entities within the same specific identification entity. Confection data entities should also be able to be moved or migrated to the specific identification entity of the corresponding device data entity. Device data entities and connection data entities which have no relation are also allowable, but only a relation to a specific identification entity is to be allowed. These so-called orphans only includes a connection data entity, without any relation to a device data entity, or a device data entity without any relation to a connection data entity. No pair of entities have a relation to the same specific identification entity. Furthermore, device data entities and connection data entities which have been deleted by an operator will not be deleted but simply marked as deleted, for example by way of an object property. It is also suitable to stop device-related operations after a migration has been detected and performed, because once the migration is completed, the connection data entity no longer relates to the corresponding device data entity, such that for example a firmware update for a specific device would no longer make sense since the device would no longer be accessible through the connection data entity. Thus, any operations such as for example firmware updates which relate to a particular device and not to the connection are no longer to be performed, because either the operation is not suitable for the device which is now accessible through the connection or the corresponding connection is an orphan and there is therefore no device for the operation to be applied to, for which reasons the operation would also not be appropriate.

With respect to the structure of the connection data entities and the device data entities, the connection data entities store data relating to the network address and also the time stamp and the connection status of the last communication trial undertaken with respect to said network address. The device data entity can for example store data relating to the device which is accessible through the corresponding specific identification entity, for example a serial number or a MAC address of the device, and also the device status data and a time stamp which relates to the last communication trial for accessing the corresponding device. Other and/or additional data can of course also be stored in the corresponding pair of entities, i.e. for example if the device is a printer, then the status of the availability of toner and/or paper, a maintenance condition or the like could be accessible. It is also suitable to delete notes which store specific identification entities if no objects which relate to them are stored.

As can be seen from the above disclosure, a memory structure which is a tree-based data storage structure is suitable for implementing this aspect of the invention, wherein the so-called JBoss cache memory device is particularly suitable for the operations which need to be available in order to implement the invention.

In accordance with the present invention, a number of operations would seem to be suitable for implementing the invention, for example information indicating a possible migration or migration-like operation.

A polling task can for example refer to a cyclic or user-triggered collection of connection data and/or device data through the network. These data can be stored in a suitable object model, for example in a cache memory which is configured by an object model. Cache memories are particularly suitable, specifically the JBoss cache. Such data can subsequently be stored permanently, which in terms of object models means that the data are persisted so as to become persistent data to be stored in a database. Another form of user-triggered information, the so-called import, can be used to add entities, which are to be controlled, to the system. The user can add connection data entities to the system which can subsequently be polled. The user can also add device data entities to the system. These should be unique within the system as a whole in terms of their relationship to specific identification entities.

It is possible to use a deletion operation to remove controlled entities from the system. This operation can be initiated by being triggered by a user. The user can remove connection data entities and/or device data entities. There can be an option to delete these entities merely by using a special property such as for example a deletion status flag or the like. In this case, in which the entities are not actually deleted, the data corresponding to these entities will still be available for log reports.

Another advantageous operation which should be available as a task is the network discovery operation in accordance with which an automatic search for devices which are connected to the system can be initiated. If a new device is found in relation to a new or different address, the task can either add a new connection data entity to the system or migrate the device data entity to the new or different connection data entity. The network discovery task has in particular at least one of the above two functions.

Another helpful software tool can be the device selection operation, in accordance with which it is possible to select one or a group of devices, which have special functions or attributes, from the multiplicity of devices participating in the network as a whole. In accordance with this device selection operation, it is for example possible to locate a special type of device, if the firmware of this special type of device has to be updated or upgraded.

Another task can be suitable for accessing a particular device which is suspected of having a malfunction or some other problem. Within a network, devices participating in it can send an alert message or the like which is not however identifiable by the network server. Accordingly, this so-called trap task is then activated when a particular connection data entity communicates this error message from the device to the network server, wherein the trap task then polls the device which is suspected of malfunctioning and requests status data, condition data and the like in order to find out the details of the malfunction or other problem with said device.

As already indicated above, another suitable operation is a firmware update operation, in accordance with which a particular device is to be identified in order to ensure that the correct firmware update is sent to this device; this task can also be configured to subsequently perform the firmware update, such that the system has information about the current firmware version of the device which can be accessed through the respective connection using the corresponding connection data entity.

In accordance with another aspect of the present invention, the above tasks and other tasks can be configured with more flexibility and functionality by creating small "child" tasks which can be combined with each other and covered by a frame which provides the beginning and end between which the child tasks can be covered and processed. In accordance with this aspect, the child tasks have to be assembled in such a way that a child task which only needs variables and constants which are available from the beginning and which produces results which are needed by other child tasks are processed first, and child tasks which need other values, constants or variables which are dependent on the function of other child tasks are arranged sequentially below the independent and/or more independent child tasks, respectively.

In accordance with this aspect of the invention, it is no longer necessary to create a large number of software tasks having fixed functions, but rather it is possible to provide a library consisting of a large number of different child tasks which can automatically be assembled so as to configure a meta-task, without the need to provide a specific software for realising a specific functionality.

Furthermore and outside of the scope of the present invention, a system is proposed for composing a meta-task which is based on a multiplicity of task extensions or child tasks, wherein a task-composing device has access to a multiplicity of task extensions and/or child tasks, each of which performs one or more particular data processing operations and exhibits a number of input values and a number of output values, wherein a meta-task input device receives a request for a multiplicity of operations or functions. In accordance with this request, the task-composing device selects the task extensions or child tasks necessary for complying with the request and assembles the selected task extensions in such a way that a dependent task extension which requires one or more input values (constants, variables, strings, etc.) which are output values of another, independent task extension is arranged so as to be processed after the independent task extension, thus creating a queue of task extensions.

In the following, specific embodiments of the present invention will be explained with reference to the attached figures, which may be briefly explained as follows:
- Figure 1: is a schematic drawing showing a simple migration scenario;
- Figure 2: shows a connection data entity being deleted;
- Figure 3: shows a device data entity being deleted;
- Figure 4: shows an unrelated connection being assigned a new device, i.e. its device data entity;
- Figure 5: shows an unrelated connection being related to a new device;
- Figure 6: shows a device data entity and a connection data entity being updated;
- Figure 7: shows a device being stored in relation to an outdated connection and therefore having to be related to another connection;
- Figure 8: illustrates a scenario in which an existing device is not related to any connection and thus has to be migrated to a suitable connection;
- Figure 9: illustrates a scenario in which a connection is unrelated to a device which is already related to an existing connection, such that another specific identification entity has to be generated in order to provide a relation to the connection data entity which is unrelated after the migration;
- Figure 10: illustrates a scenario in which an unrelated connection and an unrelated device are unified, such that a specific identification entity has to be deleted after the unification;

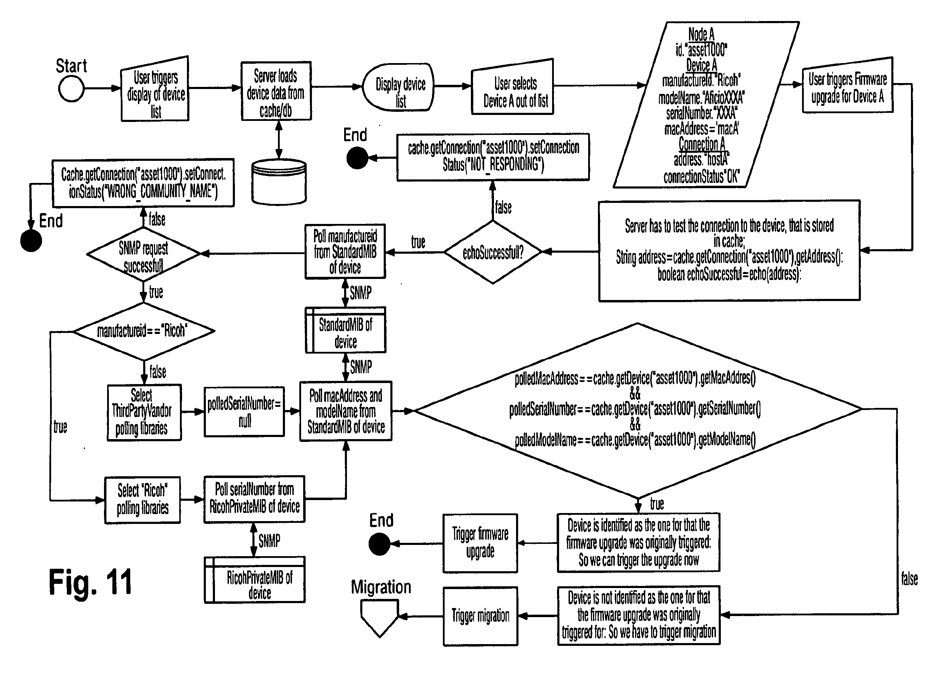

- Figure 11: shows a flow chart of a migration process due to a firmware upgrade operation trial;

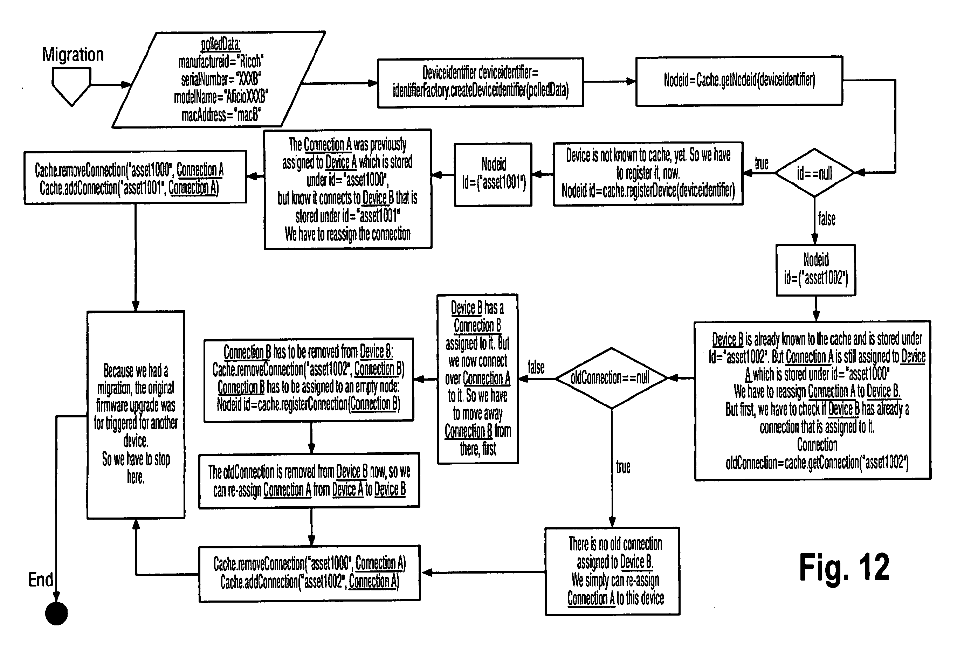

- Figure 12: shows a detailed flow chart of a migration operation;
- Figure 13: Illustrates a flow chart of another example corresponding to Fig. 11 and 12, however with a simplified structure; and
- Figure 14: Depicts another flow chart in a simplified manner.

This aspect of the invention deals with the requirements of network environments in which devices may be switched off at times, such that they are not accessible at these times. Another possibility is that devices are regularly transferred to other locations or network segments. If data have been collected about these devices for controlling and logging/statistical purposes, it is necessary to simultaneously keep track of the log data of the transferred devices, so that it is possible to model and persist the collected connection and device status data and relationships in a suitable manner. In accordance with the invention, the device data and connection data are separated into two different entities called "Connection" or connection data entity and "Device" or device data entity. The connection data entity contains network address data, a time stamp and a connection status of the last attempt to access this address. The device data entity contains data such as a serial number or a MAC address of the device's NIC and also device status data and a time stamp for when the device was last accessed.

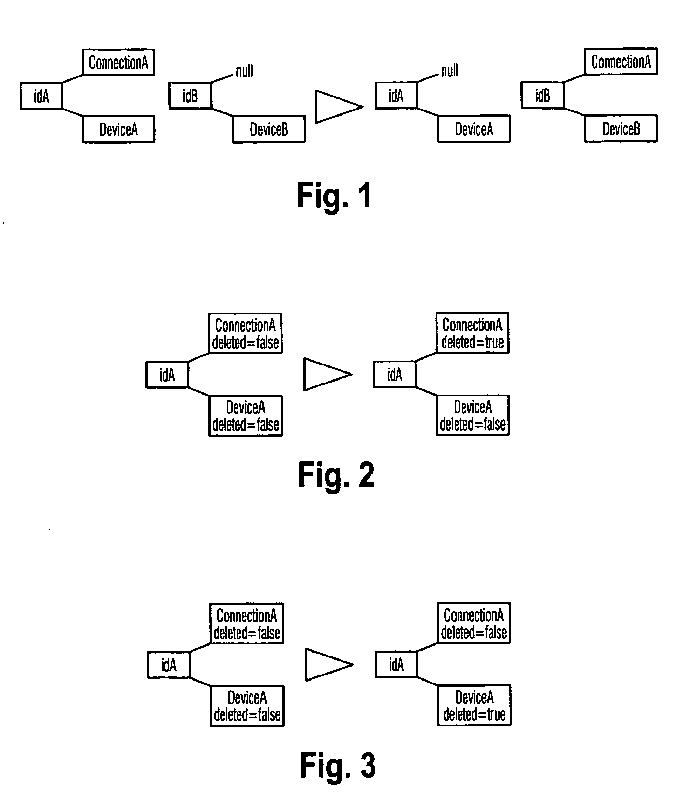

If, for example, DeviceA can be accessed via ConnectionA, then the retrieved data are stored in the corresponding device and connection data entities and both are then stored under the same "ID" - in this example, IdA. If, at the next attempt to connect via ConnectionA, another device is detected - for example, Device (see Figure 1), which is already stored under IdB - this problem is solved with a migration process.

### Figure 1: simple migration scenario

The migration process in accordance with this embodiment can be configured in accordance with a number of the following conditions:
- device data entities are always stored under the same ID (specific identification entity);
- connection data entities are migrated to the ID of the corresponding device data entity;
- so-called orphans, i.e. device or connection data entities which have no relation to each other, are allowed; they have no corresponding entity saved under the same Id;
- device or connection data entities deleted by a user action are not actually deleted but rather are simply marked as deleted by way of an object property;
- device-related operations, such as firmware updates, are stopped after a migration has been detected and performed, wherein after a migration, the connection data entity no longer relates to the device for which the operation was originally triggered;
- ID nodes with no objects stored in them are deleted.

As mentioned in the introductory portion of this specification, many different additional operations (for example polling, input, detection, network discovery, etc.), including ones not explicitly discussed here, are also useful in accordance with any embodiment of this invention and in particular in connection with the migration process in accordance with the invention. Such operations can be developed as child tasks in terms of the second aspect of the present invention. Operations which are particularly useful in connection with this first aspect of the invention include:
1. a user-triggered import of connection data entities (network addresses) or device data entities (asset identifiers);
2. a user-triggered deletion of connection data entities (network addresses) or device data entities (asset identifiers);
3. a network discovery operation;
4. a polling operation;
5. a device selection operation;
6. a firmware upgrade operation;
7. a trap receiving and handling operation.

The migration process relates here in particular to a situation, i.e. for example, a relation between a device data entity and a connection data entity has to be disabled or created due to changes in the network environment or because a connection, with or without a connected device, has to be added.

The migration process in accordance with the invention can use a technique such as is described in accordance with the second aspect of the present invention. Accordingly, the system enables the user or an administrator to compose scheduled tasks using smaller modules called task extensions or child tasks. A plurality of such composed tasks or "meta-tasks" can be run in parallel.

Because most of the system operations described here, in particular in the introductory portion of this specification, have common aspects but differ in their result, it is advantageous to use this technique in the first aspect of the invention. These commonly used operations are configured in small and reusable task extensions which can be combined with more specialised aspects of the process of this first aspect.

Uniquely identifying a device in the system is an important aspect. Nearly all in-system communications with connected devices require devices to be identifiable, but not all require the actual device to be the expected one. In order to identify devices and support migration, it is appropriate to designate a special task extension (TE) which is the first one to be executed in most of the composed tasks or meta-tasks. Two explanatory examples are as follows:
a. Device Polling Task:
   MigrationTE + PropertyPollingTE + StatusPollingTE + TonerPollingTE
b. Firmware Upgrade Task:
   MigrationTE + StatusPollingTE + FirmwareUpgradeTE.

The main difference between Examples a. and b. above is that in the case of a firmware upgrade, the execution of all the task extensions which follow the migration task extension MigrationTE is stopped if this task extension has been detected and a migration has been performed, whereas a polling task will try to retrieve all the data of the connected device even if it is not the expected device, such that all the extensions are executed, even after a migration.

A user-triggered import of connections (network addresses) is not especially relevant to the migration process. An import of addresses which are already known to the system is not allowed, hence there will be no need to disable any old relation or establish any new relation between a connection data entity and a device data entity. Newly imported addresses will subsequently be polled and any migration handled during polling.

A user-triggered import of devices (asset identifiers) is also not crucial to the migration process. An import of devices which are already known to the system is not allowed, hence there will be no need to disable any old relation or establish any new relation between a connection and a device. Newly imported devices will only be polled if a discovery operation has already found the related address or if this address has already been imported, and any migration will be handled during polling.

A user-triggered deletion of connections (network addresses) or connection data entitles is realised by marking the connection as having been deleted, although it will not actually be deleted. Since no actual object is deleted, it is not necessary to handle any migration. If a connection object which is related to a device via the same ID is marked as having been deleted, the relation is maintained, as can be seen in Figure 2.

A user-triggered deletion of devices (asset identifiers) is handled in the same way as the deletion of a connection, such that it is not necessary to handle any migration process. If a device object which is related to a connection via the same ID is marked as having been deleted, the relation is maintained, as can be derived from Figure 3.

The network discovery operation is very similar to the import of connections. Here, too, migration is not an issue. During network discovery, the addition of connections which are already known to the system is not allowed, hence there will be no need to disable any old relation or establish any new relation between a connection and a device. Newly discovered connections will subsequently be polled and any migration handled during polling.

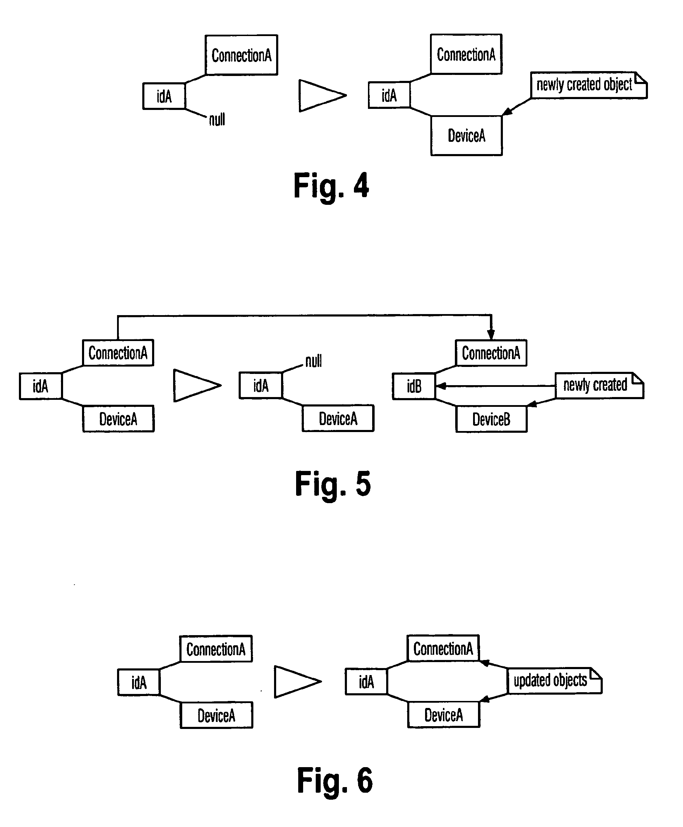

In accordance with Figures 4 to 10, it is the migration process in accordance with the present invention which has to be considered, since most of the migration cases occur and are thus to be handled in the phase of data retrieval. Seven different scenarios are explained in the following, wherein migration is an issue in some of them and not in others.

### i) No migration - Unrelated connection - New device (see Figure 4)

ConnectionA is to be polled, which is stored under IdA in the cache/persistency and has no device stored under the same ID. The polling operation returns data from DeviceA. DeviceA is sought in the cache/persistency, but has not yet been stored, hence a new DeviceA has to be created in the cache/persistency and related to ConnectionA. Since no device was stored under IdA, the newly created DeviceA object can simply be stored there.

### ii) No migration - Related connection - New device (see Figure 5)

ConnectionA is to be polled, which is stored under IdA in the cache/persistency and has DeviceA stored under the same ID. The polling operation returns data from DeviceB. DeviceB is sought in the cache/persistency, but has not yet been stored, hence a new DeviceB has to be created in the cache/persistency and related to IdB, which also has to be created.

### iii) No migration - Same device (see Figure 6)

This is the simplest scenario. ConnectionA is to be polled, which is stored under IdA in the cache/persistency and has DeviceA stored under the same ID.

The polling operation returns data from DeviceA. Since the connection and device entities are already related to each other, the given objects can simply be updated with the newly polled data.

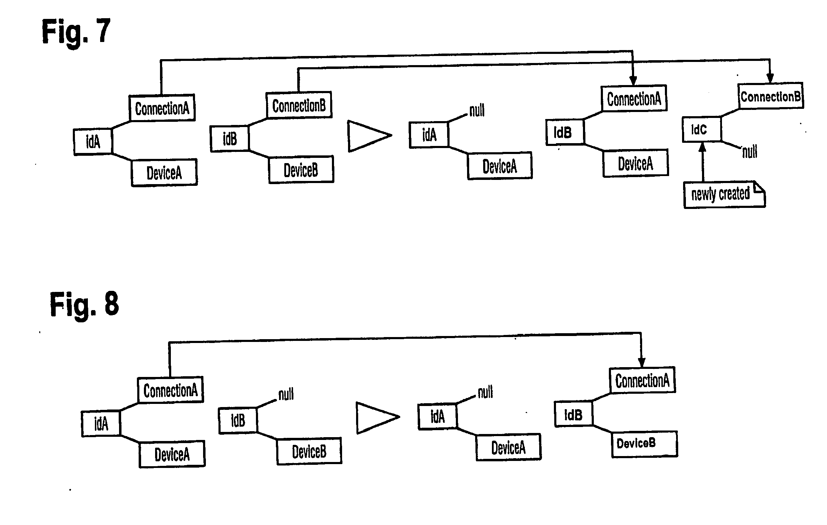

### iv) Migration - Related connection - Existing device is related to an outdated connection (see Figure 7)

ConnectionA is to be polled, which is stored under IdA in the cache/persistency and has DeviceA stored under the same ID. The polling operation returns data from DeviceB. DeviceB is sought in the cache/persistency, and an object DeviceB is found which is stored under IdB and related to ConnectionB. The relations between DeviceA and ConnectionA and between DeviceB and ConnectionB have to be disabled, ConnectionA has to be migrated to IdB, and ConnectionB has to be migrated to the newly created IdC, since it no longer relates to DeviceB.

### v) Migration - Related connection - Existing device is not related to any connection (see Figure 8)

This scenario is very similar to the previous one. ConnectionA is to be polled, which is stored under IdA in the cache/persistency and has DeviceA stored under the same ID. The polling operation returns data from DeviceB. DeviceB is sought in the cache/persistency, and an object DeviceB is found which is stored under IdB and has no connection related to it. The relation between DeviceA and ConnectionA has to be disabled, and ConnectionA has to be migrated to IdB. IdC does not have to be created in his case, since there is no outdated connection related to DeviceB this time.

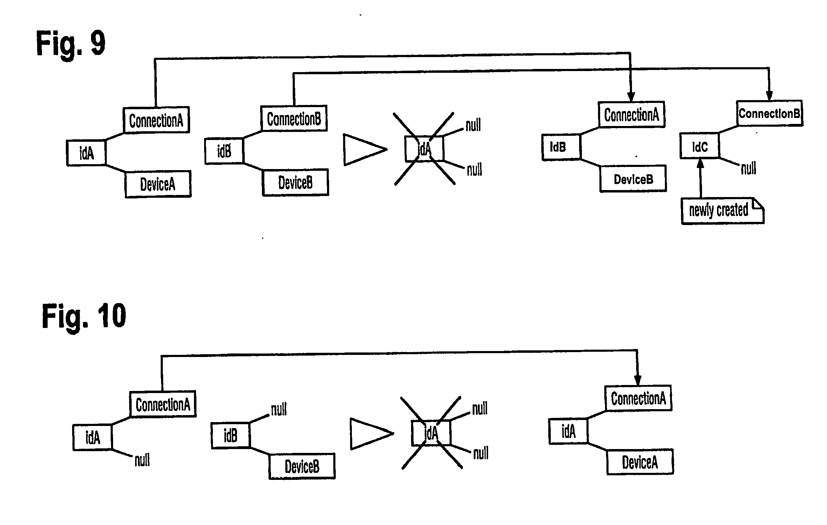

### vi) Migration - Unrelated connections - Device already present and related (see Figure 9)

ConnectionA is to be polled, which is stored under IdA in the cache/persistency and has no device stored under the same ID. The polling operation returns data from DeviceB. DeviceB is sought in the cache/persistency, and an object DeviceB is found which is stored under IdB and related to ConnectionB. ConnectionA has to be migrated to IdB, and ConnectionB has to be migrated to the newly created IdC, since it no longer relates to DeviceB. IdA should be deleted, since it no longer has any objects related to it.

### vii) Migration - Unrelated connection - Device already present but unrelated (see Figure 10)

This scenario is again very similar to the previous one. ConnectionA is to be polled, which is stored under IdA in the cache/persistency and has no device stored under the same ID. The polling operation returns data from DeviceB. DeviceB is sought in the cache/persistency, and an object DeviceB is found which is stored under IdB and does not relate to any connection. ConnectionA has to be migrated to IdB. IdA should be deleted, since it no longer has any objects related to it. IdC does not have to be created this time, since there is no ConnectionB object to be migrated in this case.

In the case of a so-called trap, a device has communicated a malfunction message to the system server, which however is usually not sufficiently precise. The process of receiving or handling an incoming trap does not involve storing any data in the cache of the system server, but merely initiates a poll of the network address from which the trap was sent, as soon as is possible.

The device selection operation is a scenario in which migration can have a major influence. If a user selects a special device for an action to be taken, this selection is based on the so-called device identifier. This can be a unique serial number or possibly the MAC address of the NIC, depending on the system and the type of device. The action to be taken is excluded from being bound to the device rather than the current connection/address via which it can currently be accessed, such that once the currently cached connection for the selected device has been contacted, it is necessary to check whether it is in fact the selected device which is responding. If the responding device is the correct device, the triggered action can simply be performed. If a migration is detected, on the basis that the responding device is not the selected device, then the migration scenario has to be handled in a similar way to the migration scenario from the polling operation. Once the migration scenario has been handled, however, the action is discontinued. The triggered action is not to be performed on the responding device, since it is not the device for which the action was originally triggered.

A firmware update operation is a special instance of "device selection" in which migration again has a major influence. When a user selects a special device for a firmware update, this selection is based on the so-called device identifier. This can be a unique serial number or possibly the MAC address of the NIC, depending on the system and the type of device. The update to be performed is excluded from being bound to the device rather than the cached/current connection/address via which it can be accessed, such that once the currently cached connection for the selected device has been contacted, it is necessary to check whether it is in fact the selected device which is responding. If the responding device is the correct device, the update can simply be performed. If, however, a migration is detected, on the basis that the responding device is not the selected device, then the migration scenario has to be handled in a similar way to the migration scenario from the polling operation. Once the migration scenario has been handled, however, the update is discontinued. The firmware update is not to be performed on the responding device, since the firmware update was not intended for said device.

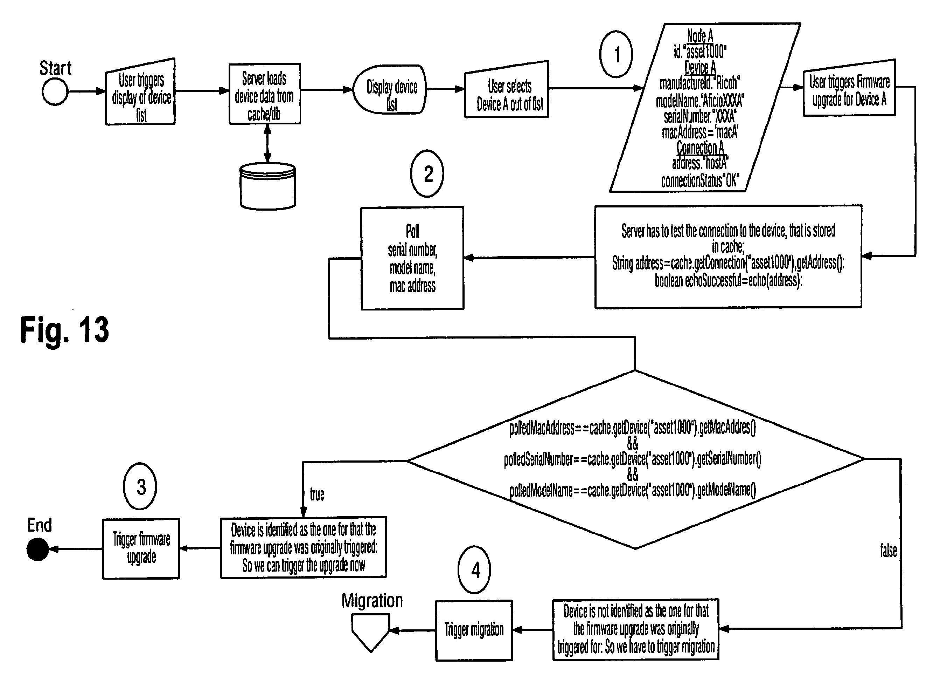

Figure 13 shows an example of`the device control and maintenance solution. After starting the process, the user has to request that the list of devices be displayed. Due to this request, the server loads device data from the cache of the server or the data base connected to the server and then displays the device list. Afterwards, the user selects a particular device A out of the list including all devices stored in the system consisting of the server, its cache and the connected data base. Then, the user selects a device and chooses to update the firmware of this particular device (see reference number 1). It is important to notice that with a particular device, the user actually means this specific physical device with the shown serial number "XXXA" and not any other device answering to the given network IP address "host". After the selection process has been completed, the user triggers the firmware upgrade for device A. The next step is related to the test of the connection to the device, which connection has been. stored in the cache, which test has to be conducted by the server. Then, with reference to the reference numeral 2, the software polls the serial number of the device answering to the given IP address "hostA". Afterwards, it is checked whether the different address information corresponds to the particular device expected to be found by using the particular address information.

In case the found device is the same as the one we have expected, the actual firmware update can be triggered (see reference number 3).

In case the found device is actually not the expected one, the migration case will be triggered.

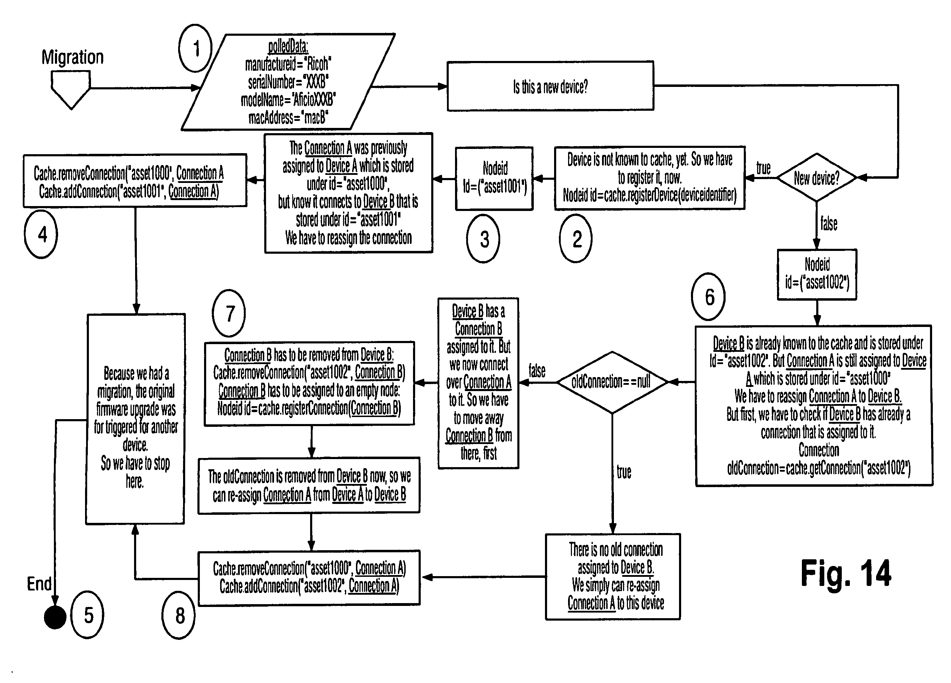

Figure 14 refers to another example of the device control and maintenance solution of this aspect, wherein again it is intended to conduct a firmware upgrade for a known, i.e. expected device of the invention. According to this embodiment which refers to the embodiment of Figure 13 an access to a device is conducted.

The device has actually serial number "XXXB" and it is (see reference number 1) examined whether this device is already known in the system. The examination reveals that this is a new device that is not stored in cache yet (see reference number 2). Therefore, a new node ID "asset 1001" is generated for this new device.

The connection information "hostA" is then moved to the device node. This will leave the expected device "XXXB" without any address (see reference number 4). As a consequence, it is not possible to update the firmware of this device, because it is not the correct device as chosen by the user and the process ends at reference number 5.

In case that the new device is already known to the cache, it is not necessary to generate a new nodelD (see reference number 6).

If the new device "XXXB" already had been assigned to address information "ConnectionB" related to the new device, it is necessary to move this address information to an empty node in the cache. The connection information "hostA" is then transferred to the device node. This will leave the expected device "XXXB" without any address (see reference number 7).

In case the new device "XXXB" does not have an address information related thereto, the connection information "hostA" will be moved to the device node. This will leave the expected devices "XXXB" without any address (see reference number 8).

In accordance with the second aspect of the invention, software tasks can be composed which are based on task extensions or child tasks which can interact with each other and act as a single "meta-task". The user can thus compose any chain of child tasks into suitable meta-tasks as desired, in order to fulfil current requirements.

The system in accordance with the invention is capable of sorting the child tasks into an order of execution in accordance with the dependencies which exist between them.

The user can also add properties to each task being composed in order to inform the system about the average time period necessary for running and completing the task, as well as the corresponding consumption of resources. These properties can be used by the executing and scheduling programs to optimise a task execution strategy. As has been emphasised above, the different operations - for example, the migration operation, the polling operation, etc. ― can be configured as task extensions, as described in principle below.

In accordance with the second aspect, a task is defined by a user by assigning a name and a list of task extensions and a list of task schedules. Each task extension has a different runtime behaviour, such as for example an execution duration, system resource consumption, etc. Examples of task extensions include initialising communications, polling device identification information from a network device, polling meter information from a network device, and polling status information from a network device.

Each instance of processing a task relates to its own context, wherein task extensions can store information which can be shared between them while the task is being executed.

Each task can access the system cache during its whole runtime in order to retrieve or store data. The cache can be regarded as a similar means to the task context for sharing data between stages of processing the task. The cache enables task extensions to exchange data between themselves and any other service or task extension, wherein in accordance with the present invention, a particular kind of cache ― the JBoss cache ― provides particularly advantageous features and capabilities in connection with the structure of a tree of nodes.

A system service is a coherent encapsulation of operation logic. While a task is being processed, services normally interact with each other and the data in the system cache. Each instance or stage can access any system service during the execution time.

The task schedule is a class which is responsible for scheduling the execution of a task and thus of its task extensions. The user can configure a task with more than one task schedule. The task will iterate through all its task schedules and select the earliest execution time.

Executing a task or meta-task means that a run method is executed in a dedicated sequence in accordance with which the task extensions scheduled in the task are performed. Execution is complete once the run method has been executed and has returned.

As a second aspect which is outside the scope of the invention, a task can be composed using an XML file to incorporate a list of so-called task extensions and a list of task schedules. Task extensions need to extend the extension point "com.ricoh.im.core.task.manager. TaskExtension". The interface looks very similar to "ITask". The task schedule needs to extend the extension point "com.ricoh.im.core.task.manager.TaskSchedule". The interface has only two methods: "queryApproximatedNextTriggerTime ()" and "queryTriggerTime ()". The task schedule can use any data from the cache and any kind of business logic to return the "IExtendableTask" trigger time and the next time it needs to be triggered after that. An example is given below:

```
 <Default>
  <Duration>1000</Duration>
  <MaxSimultaneousExecuting>10</MaxSimultaneousExecuting>
 </Default>
 <ExtendableTaskList>
  <ExtendableTask name="TaskA">
   <MaxSimultaneousExecuting>100</MaxSimultaneousExecuting>
   <TaskExtensionList>
     <TaskExtension ClassName="com.ricoh.im.core.task.manager.test.addendum.ChildTaskA" />
   </TaskExtensionList>
   <ScheduleList>
     <Schedule ClassName="com.ricoh.im.core.task.manager.test.addendum.ImmediateTaskSchedule" />
   </ScheduleList>
 </ExtendableTask >
 
 <ExtendableTask name="TaskB">
  <Duration>10000</Duration>
  <TaskExtensionList>
    <TaskExtension ClassName="com.ricoh.im.core.task.manager.test.addendum.ChildTaskB" />
  </TaskExtensionList>
  <ScheduleList>
    <Schedule ClassName="com.ricoh.im.core.task.manager.test.addendum.ImmediateTaskSchedule" />
  </ScheduleList>
 </ExtendableTask >
 
 <ExtendableTask name="TaskAB">
  <Duration>70000</Duration>
  <MaxSimultaneousExecuting>7</MaxSimultaneousExecuting>
  <TaskExtensionList>
   <TaskExtension ClassName="com.ricoh.im.core.task.manager.test.addendum.childTaskA" />
     <TaskExtension ClassName="com.ricoh.im.core.task.manager.test.addendum.ChildTaskB" />
  </TaskExtensionList>
   <ScheduleList>
     <Schedule ClassName="com.ricoh.im.core.task.manager.test.addendum.ImmediateTaskSchedule" />
   </ScheduleList>
  </ExtendableTask >
 </ExtendableTaskList>
```

In this example, three task types are defined: TaskA, TaskB and TaskAB, wherein TaskA is composed of the task extension ChildTaskA and the ITaskSchedule ImmediateTaskSchedule, TaskB is composed of ChildTaskB and also ImmediateTaskSchedule, and TaskAB is composed of two task extensions ChildTaskA and ChildTaskB and again the same ITaskSchedule ImmediateTaskSchedule.

Because there is a default section of properties, not all the properties have to be defined for every task. The default section stores assumptions made by a system when no specific choice for a particular property is given by the program or the user and/or choices which have been preset. The user can override this or simply accept the setting which the software developer has deemed to be most likely appropriate.

In order to create one of these tasks, it is only necessary to use the ITaskFactory service and the given ExtendableTask name. The ITaskFactory service will automatically create the correct task with all its task extensions and task schedule objects.

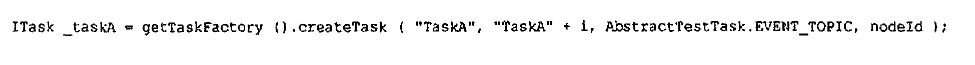

CreateTask needs four parameters:
1. the ExtendableTask name;
2. the unique task name (used to distinguish tasks in the queue);
3. the event topic name which will be used to notify the completion of execution; and
4. the node ID, which is the node in the cache which contains the date to use for this task, for example the connection node which contains connection information including the device address.

ITaskExtensions can be sorted, before execution, according to two different annotations of an execution method to allow for an order of execution, as follows:
1. "UpdatedEntity" lists the classes which this ITaskExtension is updating in the IEntityCache during execution;
2. "RequiredEntities" lists the classes which this ITaskExtension needs to access in the IEntityCache, wherein the IExtendableTask will sort these task extensions such that they are executed after all the task extensions which update any of the classes in this list.

Sorting can be performed in accordance with the approach detailed below:
1. starting with the list of ITaskExtensions and ending with the sorted list of ITaskExtensions;
2. an ITaskExtension which has no RequiredEntities can be moved to the end of the sorted list;
3. if all the ITaskExtensions which have A in their list of UpdatedEntities are in the sorted list, then A has been updated;
4. if all the RequiredEntities of an ITaskExtension have been updated, then this ITaskExtension can be moved to the end of the sorted list;
5. if the list of ITaskExtensions is empty, then the sorted list is complete and can be returned;
6. if an iteration through the list of ITaskExtensions is completed without moving one ITaskExtension to the sorted list, then the list cannot be sorted, such that there are irresolvable dependencies and the calling process needs to be informed.

With respect to ITaskExtension access to the system cache and task context, the IExtendableTask creates a map and introduces this map into every ITaskExtension prior to execution. An ITaskExtension can access this task context and any object stored in the map. Thus, several ITaskExtensions can share information between each other. The lifetime of this map is limited to the execution time of the IExtendableTask.

The IExtendableTask will also pass the reference to the system cache to every execution method of every executed ITaskExtension. In this way, ITaskExtensions can store data permanently in the cache or read and retrieve data from the system cache.

Some examples of implementing the second aspect of the invention are given below:

### Example 1

A device control software has three kinds of tasks comprising different sub-tasks:
1. polling the device status
   a. ping the device
   b. retrieve the serial number
   c. find the device in the database
   d. poll the status
   e. store the new status in the database
2. polling the device counters
   a ping the device
   b retrieve the serial number
   c find the device in the database
   d poll the counters
   e store the counters in the database
3. installing the software on the device
   a. ping the device
   b. retrieve the serial number
   c. find the device in the database
   d. install the target software onto the device
   e. store the new software list in the database.

It can be seen that the different tasks have very similar sub-tasks. A, b and c can be combined to form a task extension, for example one called IdentifyDevice. If IdentifyDevice stores the location of the device in the task context, subsequent task extensions can use this information so as to know where to store information which relates to the current device, wherein this process could be interpreted as a kind of migration-related process in accordance with the first aspect of the invention.

### Example 2

A more sophisticated example may additionally exhibit the following feature: the devices can be controlled remotely. The following task extensions are available:
1. store a document onto a given device and store the document ID in the task context;
2. scan a document onto a given device and store the document ID in the task context;
3. retrieve a document ID from the task context and delete it from a given device;
4. retrieve a document ID from the task context and print it on a given device;
5. retrieve a document from a device using its ID, perform OCR on the document, and store the result back in the device;
6. retrieve OCR data from the device using the document ID, generate a new PDF document, and store the document ID in the task context.

The user can then combine these task extensions to form the following meta-tasks:
1. copy a document by combining task extensions 2 and 4;
2. print a document on a device by combining task extensions 1, 4 and 3;
3. scan and perform OCR on a document by combining task extensions 2, 5, 6 and 4.

This somewhat resembles a workflow management system. The user is not, however, able to configure any decisions made by the system, and the aim of this invention is a very high-performance system.

The user can also combine the task extensions in any way in order to create new solutions, including some which may not have been envisaged by the developer of the system.

## Claims

1. A system, including the following features:
- a network comprising a plurality of connections for connecting devices to it;
- a specific identification entity (IdA, IdB, etc.) for respectively identifying each of the connections;
- a network server device, configured to access the plurality of connections through the specific identification entities,
wherein the specific identification entities are each configured with a respective connection data entity which is configured to store data relating to a network address in the network and a connection status of the last communication trial undertaken with respect to that network address, and a respective device data entity which is configured to store data for identifying a device which is accessible over the network, in such a way that the respective connection data entity can be maintained if the corresponding device data entity is no longer valid,
**characterized in that** the connection data entity is configured to be assigned to the responding device if the connection identified by the specific identification entity is accessed and a device different from the device defined by the identification provided by the device data entity responds.

2. The system according to claim 1, wherein the system is configured to delete the relation between the device data entity and the particular specific identification entity if a device which is deemed to be accessible through a particular specific identification entity (IdA, IdB, etc.) is in fact not accessible through said particular specific identification entity.

3. The system according to claim 2, wherein the system is configured to provide the connection data entity with information indicating that it is deleted, although it is in fact maintained and merely marked as having been deleted.

4. The system according to any one of the preceding claims, comprising a network server device configured to store device data entities of the devices and to relate, if a specific network connection is accessed in order to access a specific device but another device responds, the device entity data associated with the other device to the specific network connection and to thus migrate its connection data entity and the corresponding connection to the other device and its specific device data entity.

5. The system according to any one of the preceding claims, being configures to suspend, if the migration of a device has been detected, all device-dependent operations such as for example a framework update operation.

6. The system according to any one of the preceding claims, wherein the connection data entity and the device data entity each include time stamp data and/or status data, including information about an access time at which the connection was last accessed and a time at which the device was last accessed and/or a connection status and a device status, respectively.

## Patentansprüche

1. System, enthaltend folgende Merkmale:
- ein Netzwerk, das eine Mehrzahl von Verbindungen zum Verbinden des Systems mit Geräten enthält;
- eine spezifische Identifikationsdateneinheit (IdA, IdB, etc.) zum jeweiligen Identifizieren jeder der Verbindungen;
- ein Netzwerkservergerät, das eingerichtet ist, auf die Mehrzahl von Verbindungen über die spezifischen Identifikationseinheiten zuzugreifen;
wobei die spezifischen Identifikationsdateneinheiten jeweils mit einer jeweiligen Verbindungsdateneinheit eingerichtet bzw. ausgestattet sind, um sich auf eine Netzwerkadresse in dem Netzwerk und einen Verbindungsstatus des letzten in Bezug auf jene Netzwerkadresse unternommenen Kommunikationsversuchs beziehende Daten zu speichern, und mit einer jeweiligen Gerätedateneinheit eingerichtet bzw. ausgestattet sind, die eingerichtet ist, Daten zum Identifizieren eines Geräts, auf das über das Netzwerk zugegriffen werden kann, in solch einer Weise zu speichern, dass die jeweilige Verbindungsdateneinheit beibehalten werden kann, wenn die entsprechende Gerätedateneinheit nicht mehr gültig ist,
**dadurch gekennzeichnet, dass** die Verbindungsdateneinheit eingerichtet ist, dem antwortenden Gerät zugeordnet zu werden, wenn auf die von der spezifischen Identifikationsdateneinheit identifizierte Verbindung zugegriffen wird und ein Gerät antwortet, das sich von dem von der in der Gerätedateneinheit vorgesehenen Identifikation definierten Gerät unterscheidet.

2. System gemäß Anspruch 1, wobei das System eingerichtet ist, die Beziehung zwischen der Gerätedateneinheit und der besonderen spezifischen Identifikationsdateneinheit zu löschen, wenn ein Gerät, von dem angenommen wird, dass auf es durch eine besondere spezifische Identifikationsdateneinheit (IdA, IdB, etc.) zugegriffen werden kann, tatsächlich nicht durch die besondere spezifische Identifikationsdateneinheit erreichbar ist.

3. System gemäß Anspruch 2, wobei das System eingerichtet ist, die Verbindungsdateneinheit mit Informationen auszustatten, die anzeigen, dass sie gelöscht ist, obwohl sie tatsächlich beibehalten wird und nur als gelöscht gekennzeichnet wird.

4. System gemäß irgendeinem der vorhergehenden Ansprüche, enthaltend ein Netzwerkservergerät zum Speichern von Gerätedateneinheiten der Geräte und zum Herstellen einer Beziehung, falls auf eine spezifische Netzwerkverbindung zum Zugriff auf ein spezifisches Gerät zugegriffen wird aber ein anderes Gerät antwortet, zwischen den dem anderen Gerät zugeordneten Gerätedateneinheiten und der spezifischen Netzwerkverbindung und so die Verbindungsdateneinheiten und die entsprechende Verbindungen auf das andere Gerät und seine spezifischen Gerätedateneinheit zu migrieren bzw. umzustellen.

5. System gemäß irgendeinem der vorhergehenden Ansprüche, das eingerichtet ist, alle geräteabhängigen Vorgänge wie etwa zum Beispiel einen Rahmenupdatevorgang auszusetzen, wenn die Migration bzw. Umstellung eines Geräts detektiert worden ist.

6. System gemäß irgendeinem der vorhergehenden Ansprüche, bei dem die Verbindungsdateneinheit und die Gerätedateneinheit jeweils Zeitstempeldaten und/oder Zustandsdaten einschließlich Informationen über eine Zugriffszeit, zu der zuletzt auf die Verbindung zugegriffen wurde, und eine Zeit, zu der auf das Gerät zuletzt zugegriffen wurde, und/oder einen Verbindungszustand bzw. einen Gerätezustand enthält.

## Revendications

1. Système, comprenant les caractéristiques suivantes :
- un réseau comprenant une pluralité de connexions pour connecter des dispositifs à celui-ci ;
- une entité d'identification spécifique (IdA, IdB, etc.) pour identifier respectivement chacune des connexions ;
- un dispositif de serveur de réseau, configuré pour accéder à la pluralité de connexions par l'intermédiaire des entités d'identification spécifiques,
dans lequel les entités d'identification spécifiques sont chacune configurées avec une entité de données de connexion respective qui est configurée pour stocker des données relatives à une adresse de réseau dans le réseau et un statut de connexion du dernier essai de communication entrepris en ce qui concerne cette adresse de réseau, et une entité de données de dispositif respective qui est configurée pour stocker des données pour identifier un dispositif qui est accessible sur le réseau, de telle sorte que l'entité de données de connexion respective puisse être maintenue si l'entité de données de dispositif correspondante n'est plus valide,
**caractérisé en ce que** l'entité de données de connexion est configurée pour être assignée au dispositif répondant si la connexion identifiée par l'entité d'identification spécifique fait l'objet d'un accès et qu'un dispositif différent du dispositif défini par l'identification fournie par l'entité de données de dispositif répond.

2. Système selon la revendication 1, dans lequel le système est configuré pour supprimer la relation entre l'entité de données de dispositif et l'entité d'identification spécifique particulière si un dispositif qui est jugé être accessible par l'intermédiaire d'une entité d'identification spécifique particulière (IdA, IdB, etc.) n'est en fait pas accessible par l'intermédiaire de ladite entité d'identification spécifique particulière.

3. Système selon la revendication 2, dans lequel le système est configuré pour fournir à l'entité de données de connexion des informations indiquant qu'elle est supprimée, bien qu'elle soit en fait maintenue et marquée simplement comme ayant été supprimée.

4. Système selon l'une quelconque des revendications précédentes, comprenant un dispositif de serveur de réseau configuré pour stocker des entités de données de dispositif des dispositifs et pour lier, si une connexion de réseau spécifique fait l'objet d'un accès afin d'accéder à un dispositif spécifique mais qu'un autre dispositif répond, les données d'entité de dispositif associées à l'autre dispositif à la connexion de réseau spécifique et pour migrer ainsi son entité de données de connexion et la connexion correspondante vers l'autre dispositif et son entité de données de dispositif spécifique.

5. Système selon l'une quelconque des revendications précédentes, qui est configuré pour suspendre, si la migration d'un dispositif a été détectée, toutes les opérations dépendantes du dispositif, comme par exemple, une opération de mise à jour de cadre.

6. Système selon l'une quelconque des revendications précédentes, dans lequel l'entité de données de connexion et l'entité de données de dispositif comprennent chacune des données d'estampille temporelle et/ou des données de statut, comprenant des informations sur un temps d'accès auquel la connexion a fait l'objet d'un accès la dernière fois et un temps auquel le dispositif a fait l'objet d'un accès la dernière fois et/ou un statut de connexion et un statut de dispositif, respectivement.
